# EUROPEAN PATENT SPECIFICATION

(11) **EP 4 108 939 B1**
(45) Date of publication and mention of the grant of the patent: **07.10.2026**
(21) Application number: 22180382.8
(22) Date of filing: 22.06.2022
(51) Int. Cl.: F16B 39/10, F16B 39/24

(54) **NUT LOCKING WASHER**
MUTTERNSICHERUNGSSCHEIBE
RONDELLE DE BLOCAGE D'ÉCROU

(30) Priority: 23.06.2021 US 202117355809
(43) Date of publication of application: 28.12.2022
(73) Proprietor: PRATT & WHITNEY CANADA CORP., Longueuil, Québec J4G 1A1 (CA)
(72) Inventor: PANKRATOV, Maksim, (01BE5) Longueuil, J4G 1A1 (CA); CARTIER, Simon, (01BE5) Longueuil, J4G 1A1 (CA)
(74) Representative: Dehns

(56) References cited:
- EP-A2- 1 471 269
- WO-A1-2017/020286
- WO-A1-96/30660
- WO-A1-97/18925
- AU-B2- 618 179
- CN-A- 107 654 474
- CN-A- 108 916 198
- DE-C- 540 815
- FR-A1- 2 710 376
- FR-A1- 3 019 865
- KR-A- 20180 061 719
- US-A- 1 440 938
- US-A- 1 441 619
- US-A- 4 274 754
- US-A- 6 095 735
- US-A1- 2018 163 770

## Description

### TECHNICAL FIELD

The disclosure relates generally to aircraft engines and, more particularly, to lock washer suitable for use in aircraft engines.

### BACKGROUND

Lock washers are typically used in aircraft engines to rotatably lock a threaded fastener (e.g. a nut) to a shaft, in order to prevent unwanted undoing of the nut relative to the shaft. Such threaded fasteners may be used to fix various rotating components within the aircraft engine such as compressor and turbine discs, bearings, gears and seal runners. Lock washers typically have annular bodies with circumferentially-overlapping inner and outer lugs or tabs for engaging with respective slots in the shaft and the threaded fastener to prevent unwanted relative rotation therebetween.

Lock washers typically undergo high stresses due to, for instance, centrifugal loads caused by the engine's high rotating speeds. Such stresses may cause fatigue in the lock washer, specifically at certain stress concentration points near circumferentially overlapping inner and outer lugs. This may lead to fractures of the lock washers, potentially resulting in loose lock washer fragments being trapped in surrounding rotating components.

DE540815C discloses a prior art lock washer as set forth in the preamble of claim 1.

### SUMMARY

In one aspect, there is provided a lock washer for preventing relative rotation between an inner component and an outer component in an aircraft engine as recited in claim 1.

In another aspect, there is provided a rotating shaft assembly for an aircraft engine as set forth in claim 10.

In a further aspect, there is provided a method for assembling a retention assembly for an aircraft engine as recited in claim 12.

Features of embodiments are set forth in the dependent claims.

### BRIEF DESCRIPTION OF THE DRAWINGS

Reference is now made to the accompanying figures in which:
FIG. 1 is a schematic cross sectional view of a gas turbine engine;
FIG. 2 is an isometric, partially-sectional view of a portion of a rotating assembly of the gas turbine engine of Fig. 1;
FIGS. 3A-3C are isometric views of a shaft, fastener and retaining ring, respectively, for a rotating assembly;
FIG. 4 is a front schematic view of a lock washer for a rotating assembly;
FIG. 5 is an isometric, partially sectional view of a portion of a rotating assembly of the gas turbine engine of Fig. 1;
FIG. 6 is a front schematic view of a lock washer for a rotating assembly;
FIGS. 7A-7B are perspective and enlarged side cross-sectional views, respectively, of a portion of a rotating assembly;
FIG. 8 is an isometric view of a lock washer for a rotating assembly;
FIGS. 9A-9B are front and isometric views, respectively, of a portion of a rotating assembly; and
FIG. 10 is a front schematic view of a lock washer for a rotating assembly.

### DETAILED DESCRIPTION

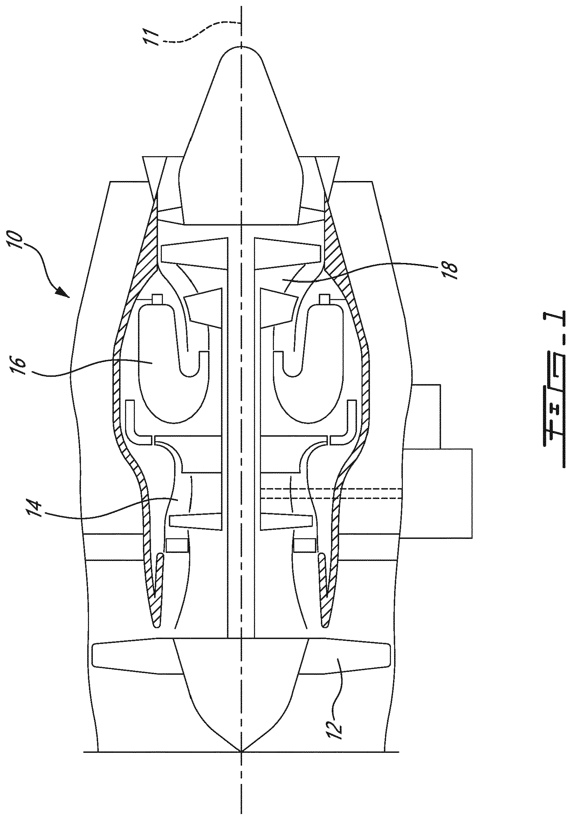

FIG. 1 illustrates a gas turbine engine 10 of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. Although FIG. 1 shows a turbofan-type engine, the present disclosure is also applicable to other types of aircraft engines and mechanical assemblies.

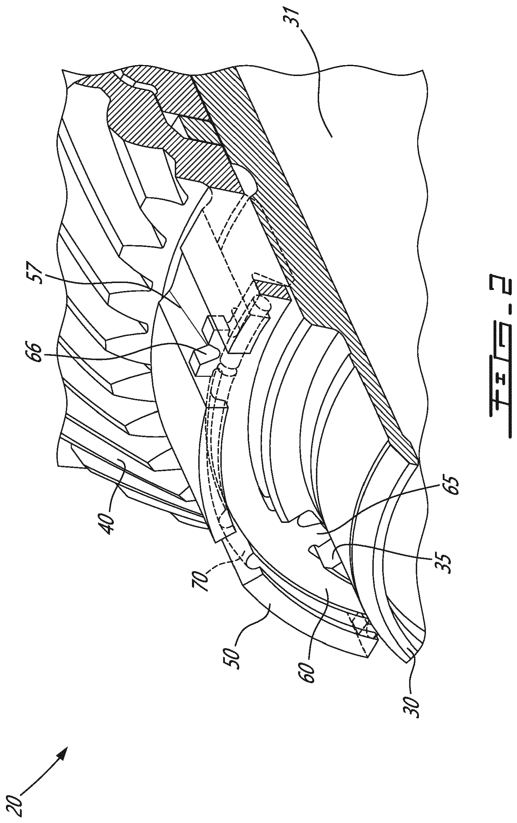

Referring to FIG. 2-3C, an exemplary rotating assembly 20 for the gas turbine engine 10 is shown. Illustratively the rotating assembly 20 includes a shaft 30 operable for rotation about a central axis 11 of the gas turbine engine 10 (FIG. 1) with a gear 40 rotatably mounted to the shaft 30. A threaded fastener (or simply "fastener"), illustratively a nut 50, is rotatably mounted to the shaft 30 and is operable to axially retain the gear 40 to the shaft 30. The rotating assembly 20 may thus be referred to as a rotating shaft assembly. The rotating assembly 20 may be one of various rotating assemblies within the gas turbine engine 10, for instance on main engine rotors or other rotating components such as gearshafts, torque shafts and propeller shafts. Other types of rotating assemblies may be contemplated as well. For instance, the nut 50 may be operable to axially retain other components to the shaft 30 such as bearings, seal runners, compressor discs and turbine discs. In the embodiment shown in FIG. 2, the rotating assembly 20 further includes a lock washer 60 to rotatably lock the nut 50 to the shaft 30, as will be discussed in further detail below. The depicted rotating assembly 20 further includes a retaining feature, illustratively a retaining wire 70, for axially retaining the lock washer 60, as will be discussed in further detail below.

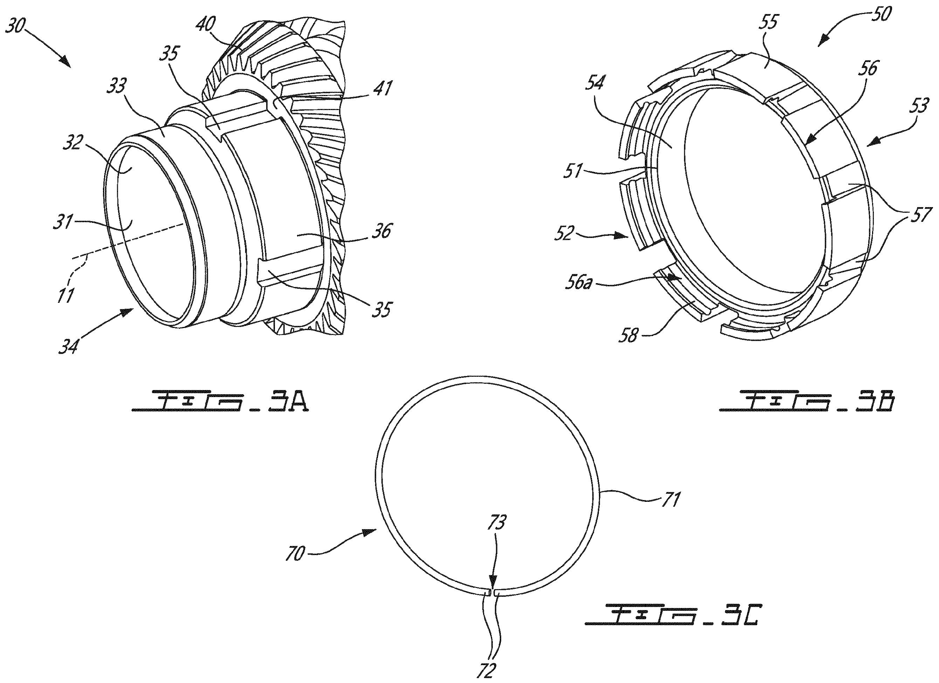

Referring to FIGS. 2 and 3A, the shaft 30 includes a bore 31, an inner circumferential surface 32 and an outer circumferential surface 33. The shaft 30 includes first 34 and second (not shown) axial ends along the central axis 11. A plurality of axial slots 35 are circumferentially spaced apart around the outer circumferential surface 33. In the depicted embodiment, the outer circumferential surface 33 includes a raised annular shoulder 36 extending with the slots 35 disposed therein. Other arrangements for the slots 35 along the outer circumferential surface 33 may be contemplated as well. The outer surface of the raised annular shoulder 36 may include threading (not shown) for engagement with the nut 50, as will be discussed in further detail below. In the depicted case, the annular shoulder 36 does not fully extend towards the first axial end 34, for instance to allow the first axial end 34 of the shaft 30 to engage with other components of the engine 10. The number, size and arrangement of the axial slots 35 may vary, for instance based on the geometry of the lock washer 60, as will be discussed in further detail below. Illustratively, the shaft 30 includes four axial slots 35.

In the embodiment shown in FIGS. 2 and 3A, a bevelled gear 40 is mounted to the shaft 30 to be axially retained by the nut 50. Other gear types may be contemplated as well. In other embodiments, other components of the engine 10 may be retained by the nut 50 on the shaft 30, such as various bearings, seal runners, compressor discs and turbine discs. In the depicted embodiment, the gear 40 includes a radially-inward protruding tab 41 insertable into one of the shaft slots 35, for instance for alignment and locked-rotation purposes. In other cases, additional tabs 41 may be provided.

Referring to FIGS. 2 and 3B, the nut 50 has an annular body 51 having a first axial end 52, a second axial end 53, an inner circumferential surface 54 and an outer circumferential surface 55. A plurality of flanges or overhanging portions 56 protrude axially from the annular body 51 and include axial slots 57 circumferentially spaced apart around the nut 50, illustratively around a radially outer surface of the overhanging portions 56. In the embodiment shown in FIGS. 2 and 3B, the axial slots 57 extend axially towards and are open at the first axial end 52 of the nut 50. This may facilitate engagement between the nut 50 and protruding tabs of the lock washer 60, as will be discussed in further detail below. The number, size and arrangement of the axial slots 57 may vary, for instance based on the geometry of the lock washer 60. Illustratively, the nut 50 includes nine axial slots 57. In some embodiments, the number of axial slots 35 in the shaft 30 may correlate to the number of axial slots 57 in the nut 50, for instance via a predetermined ratio for optimal lock washer 60 alignment, as will be discussed in further detail below. The inner circumferential surface 54 may be threaded (not shown) for engagement with a similarly threaded portion of the shaft 30. As such, the nut 50 may be rotatably mounted and torqued to the shaft 30. The magnitude of nut pre-torque may be pre-established or predetermined based on the specific nature of rotating assembly 20. As such, when lock washer 60 is installed, any additional rotation of the nut 50 may preferably be minimized, as will be discussed in further detail below. A radially inner circumferential surface 56a of the flange 56 includes a circumferential groove 58. The groove 58 is sized and shaped to receive the retaining wire 70 for axial retention of the lock washer 60. Illustratively, the groove 58 has a semi-circular cross-section, although other cross-sectional shapes for the groove 58 may be contemplated as well.

Referring additionally to FIG. 3C, the shown retaining wire 70 has a partially-annular body 71 with a circumferential gap 72 at end portions 73 thereof. The retaining wire 70 is insertable in the groove 58 of the nut 50 to axially retain the lock washer 60 in an assembled configuration of the rotating assembly 20. Illustratively, the retaining wire 70 has a circular cross-section, although other cross-sectional shapes for the retaining wire 70 may be contemplated as well. To install the retaining wire 70, the end portions 73 may be squeezed together, thereby compressing or reducing the circumferential gap 72 so the semi-annular body 71 may be slipped over the shaft 30. Other devices for axially retaining the lock washer 60 such as retaining rings may be contemplated as well, for instance a spiral or circlip-type retaining ring.

In the embodiment shown in FIGS. 2-3C, the lock washer 60 is operable to rotatably retain the shaft 30 to the nut 50, with the retaining wire 70 providing axial retention for the lock washer 60. As such, the combination of the shaft 30, nut 50, lock washer 60 and retaining wire 70 may be referred to as a retention assembly. The various lock washers 60 may be operable for preventing relative rotation between other components within an aircraft engine as well, i.e. between an inner component (illustratively shaft 30) and an outer component (illustratively nut 50) in an aircraft engine 10.

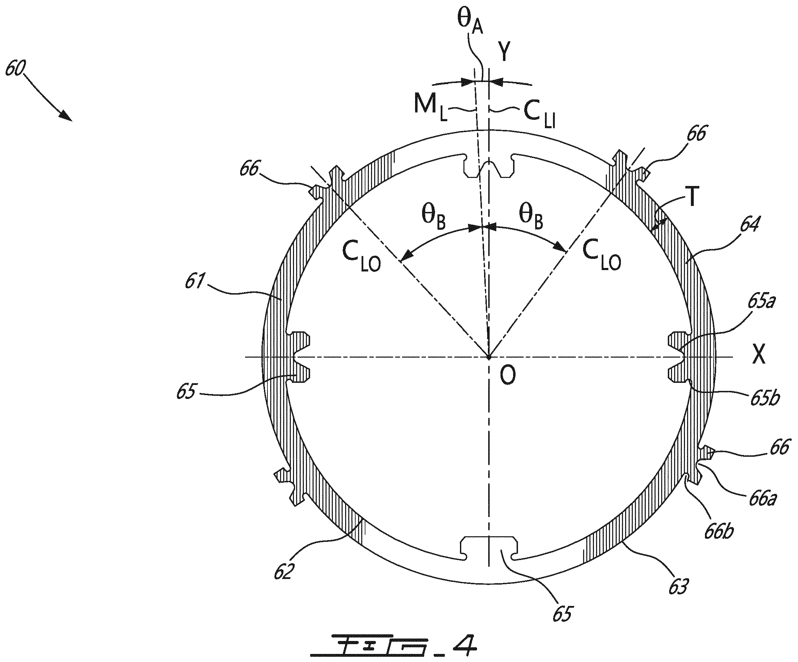

Referring to FIG. 4 in addition to FIGS. 2-3C, there is shown an embodiment of a lock washer 60 for rotatably locking the nut 50 to the shaft 30. A front view of the lock washer 60 is shown, with orthogonal X and Y axes intersecting at a radial center O of the lock washer 60. The lock washer 60 incudes an annular body 61 with an inner circumferential surface 62, an outer circumferential surface 63, and opposed axial surfaces 64. The inner circumferential surface 62 and the outer circumferential surface 63 are radially spaced apart to define a radial thickness T of the annular body 61. The inner circumferential surface 62 includes radially-inward protruding lugs or tabs 65 arranged about its circumference, while the outer circumferential surface 63 includes radially-outward protruding lugs or tabs 66 arranged about its circumference. The number, sizing, shape and arrangement of the radially-inward protruding tabs 65 and radially-outward protruding tabs 66 may vary, as will be discussed in further detail below. In an assembled configuration of the rotating assembly 20, the radially-inward protruding tabs 65 are received within the shaft slots 35, while the radially-outward protruding tabs 66 are received within into the nut slots 57. This configuration thus rotatably locks the nut 50 to the shaft 30, with the radially-outward protruding tabs 66 preventing rotation of the nut 50 relative to the shaft 30.

The lock washer 60 shown in FIG. 4 includes four radially-inward protruding tabs 65 and four radially-outward protruding tabs 66. Other numbers of tabs 65, 66 may be contemplated as well. For instance, at least two radially-outward protruding tabs 66 may be present on the outer circumferential surface 63 for optimal rotational locking of the nut 50. The number and arrangement of radially-inward protruding tabs 65 may coincide or be associated with the number and arrangement of slots 35 in the shaft 30 for optimal alignment. In the depicted embodiment, the number and circumferential spacing of radially-inward protruding tabs 65 are equal to those of the slots 35 in the shaft 30. In other cases, the number of slots 35 may exceed the number of radially-inward protruding tabs 65, with the slots 35 having less angular spacing between each other. In the depicted embodiment, the number of radially-outward protruding tabs 66 (i.e. four) is less than the number of slots 57 in the nut 50 (i.e. nine), with the nut slots 57 being spaced closer together than the radially-outward protruding tabs 66. This may facilitate the alignment of the outward-protruding tabs 66 in the slots 57 upon installation. Other numbers of tabs and slots may be contemplated as well.

In the embodiment shown in FIG. 4, three of the four radially-inward protruding tabs 65 include cutouts 65a defined in radially inner surfaces of the radially-inward protruding tabs 65, for instance to reduce to mass of the lock washer 60 and aid in reducing deformation of the lock washer 60 under rotation. Similarly, the four radially-outward protruding tabs 66 include cutouts 66a in radially outer surfaces of the radially-outward protruding tabs 66. In the shown case, the cutouts 65a, 66a are V-shaped cutouts, although other cutout shapes may be contemplated as well. One of the depicted radially-inward protruding tabs 65 does not include a cutout 65a, for instance for balancing purposes. Other numbers and arrangements of cutouts may be contemplated as well. In the embodiment shown in FIG. 4, each of the radially-outward protruding tabs 66 includes a pair of fillets 66b where the radially-outward protruding tabs 66 meet the outer circumferential surface 63. In the depicted embodiment, the radially-outward protruding tabs 66 are symmetric (i.e. the fillets 66b on either side of the tabs 66 are like or identical), which allows the depicted lock washer 60 to be reversibly installed in the rotating assembly 20. In other cases, the fillets 66b may be sized differently, as will be discussed in further detail below. The radially-inward protruding tabs 65 similarly each include pairs of fillets 65b where the radially-inward protruding tabs 65 meet the inner circumferential surface 62.

In an exemplary assembly process of the rotating assembly 20, in a first step the nut 50 is rotatably mounted to the shaft 30, for instance by positioning the inner circumferential surface 54 against the shoulder 36 to line up the corresponding threads and then by rotating the nut 50 in a clockwise direction until sufficiently torqued. Then, the lock washer is inserted between the shaft 30 and the nut 50, with the radially-inward protruding tabs 65 being inserted into the shaft slots 35 and the radially-outward protruding tabs 66 being inserted into the nut slots 57. Various means for optimizing the alignment of the tabs 65, 66 and slots 35, 57 may be contemplated, as will be discussed in further detail below. Then, the retaining wire 70 is inserted into the groove 58 of the nut 50 to axially retain the lock washer 60. Once in this assembled configuration, the lock washer 60 may be loosely retained in an axial and radial direction and thus be freely able to expand under centrifugal loads. The radially-outward protruding tabs 66 may engage with the nut slots 57 under rotation, preventing the nut 50 from rotating relative to the shaft 30, i.e. from undoing.

In an assembled configuration of the rotating assembly 20 and under rotation, the radially-outward protruding tabs 66, and more particularly the fillets 66b of the radially-outward protruding tabs 66, experience various stresses. For instance, deformation and bending of the rotating lock washer 60 cause such stresses. As such, in the lock washer 60 according to the invention, the radially-inward protruding tabs 65 are circumferentially offset from the radially-outward protruding tabs 66 to relieve such stresses. In other words, there is no circumferential overlap between any of the radially-inward protruding tabs 65 and the radially-outward protruding tabs 66. Thus, the aforementioned stresses experienced at the radially-outward protruding tabs 66, and more particularly at the fillets 66b of the radially-outward protruding tabs 66, may be minimized compared to a traditional lock washer having overlapping outer and inner tabs or lugs.

As discussed above, the number of slots 35 in the shaft 30 and slots 57 in the nut 50 may be selected for optimized alignment accuracy when installing the lock washer 60 in the rotating assembly 20. By optimized alignment accuracy, it is intended that the lock washer 60 should have its radially-inward protruding tabs 65 alignable with the slots 35 in the shaft 30 and the radially-outward protruding tabs 66 alignable with the slots 57 with minimal rotation of the lock washer 60, and thus the nut 50, required. In various embodiments, the lock washer 60 may be reversible for increased installation accuracy, as will be discussed in further detail below. In addition, the number and positioning of slots 35, 57 may be optimized. For instance, the number of shaft slots 35 and nut slots 57 may be maximized with no common integer shared between them. For example, the shaft 30 and nut 50 may include, respectively, three shaft slots 35 for eight nut slots 57, four shaft slots 35 for eight nut slots 57, or five shaft slots 35 for twelve nut slots 57. Other numbers of shaft slots 35 and nut slots 57 may be contemplated as well. In the embodiment shown in FIGS. 2-4, there are four shaft slots 35 and nine nut slots 57.

In addition, when the rotating assembly 20 is assembled, the alignment of the tabs 65, 66 may be further optimized. As the lock washer 60 is rotated relative to the nut 50 using a step angle equal to three hundred and sixty degrees divided by the number of nut slots 57, each of such rotations causes a change of the angle between the radially-inward protruding tabs 65 and the shaft slots 35. Multiple positions of the radially-inward protruding tabs 65 relative to the shaft slots 35 may be achieved when applying consecutive stepped rotations, as described above. At assembly, the angular position of the lock washer 60 may be optimized so that when the radially-outward protruding tabs 66 are aligned with the nut slots 57, the radially-inward protruding tabs 65 are more or less aligned with the shaft slots 35. The lock washer 60 may then be installed with little to no further rotation of the nut 50 required.

Referring to FIGS. 2 to 4, to further increase accuracy when installing the lock washer 60 in the rotating assembly 20, the lock washer 60 depicted in FIG. 4 is reversible. In other words, the lock washer 60 may be positioned in the rotating assembly 20 between the shaft 30 and nut 50 in two orientations, i.e. each separated by one hundred and eighty degrees relative to the Y axis. For lock washer 60 shown in FIG. 4, an offset angle Θ_{A} is defined between a mean line M_{L} of two radially-outward protruding tabs 66 and the center line C_{LI} of the radially-inward protruding tab 65 positioned between the two radially-outward protruding tabs 66. The mean line M_{L} of two radially-outward protruding tabs 66 itself is defined at an angular midpoint between the two respective center lines C_{LO} of the radially-outward protruding tabs 66. Illustratively, the two radially-outward protruding tabs 66 are circumferentially separated from the center line C_{LO} by an angle Θ_{B}, for instance twenty degrees in one particular embodiment, although other angles may be contemplated as well. As shown in FIG. 4, center line C_{LI}, center lines C_{LO}, and mean line M_{L} each extend from the center O of the lock washer. As such, when the lock washer 60 is reversed (i.e. its orientation is reversed by one hundred and eighty degrees) upon installation, the angular shift of the radially-inward protruding tab 65 relative to a given slot 35 in the shaft 30 will be equal to double the offset angle Θ_{A}. By increasing the installation accuracy, the lock washer 60 may not require additional rotation for proper installation, which may minimize the amount of further nut 50 rotation required.

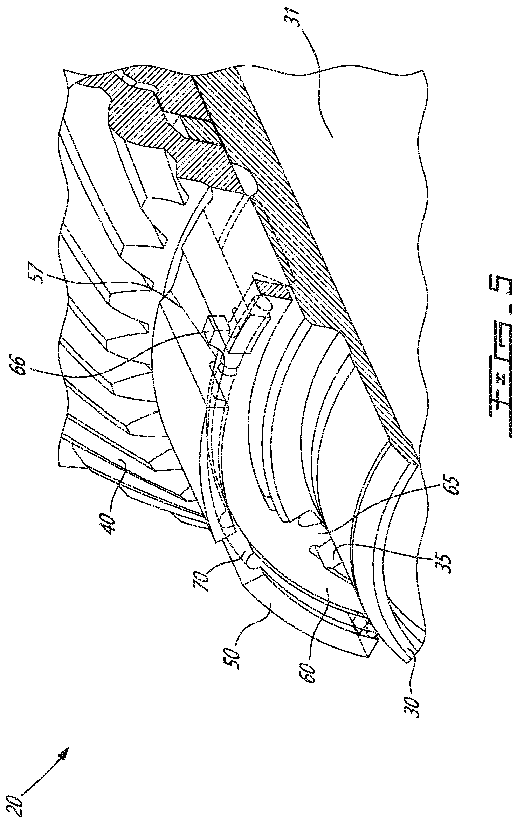

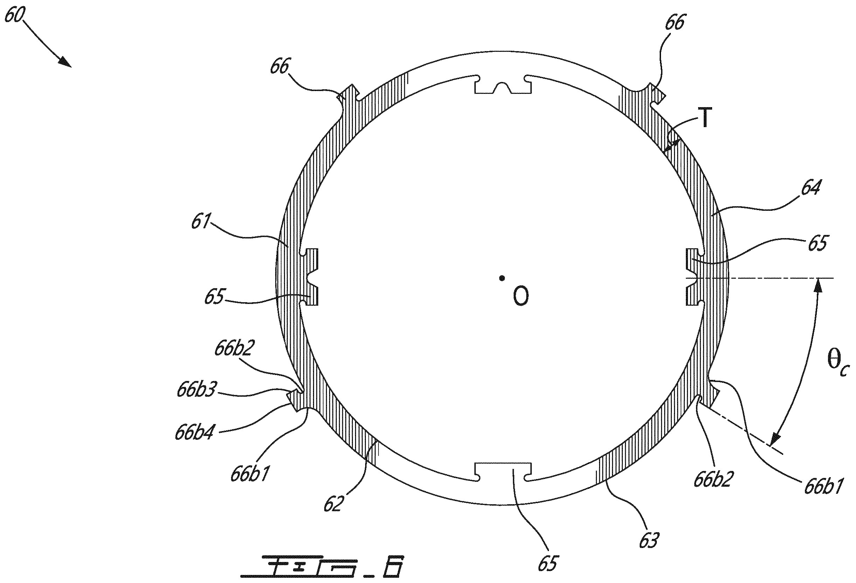

Referring to FIGS. 5 and 6, another embodiment of a rotating assembly 20 is shown, with like reference numerals used to identify like components. As can be seen in lock washer 60 shown in FIG. 6, in this embodiment the radially-outward protruding tabs 66 include asymmetric outer tab fillets 66b, with a first outer tab fillet 66b1 having a larger radius than a second outer tab fillet 66b2. In the embodiment shown in FIG. 6, but not necessarily the case in all embodiments, the second outer tab fillet 66b2, i.e. with the smaller fillet radius, has the same fillet radius as the outer tabs fillets 66b in the lock washer 60 shown in FIG. 4, and meets a side portion 66b3 of the radially-outward protruding tab 66. The first outer tab fillet 66b1, i.e. with the larger fillet radius, has a more gradual curvature and directly meets a radial end portion 66b4 of the radially-outward protruding tab 66. The larger fillet radius of the first outer tab fillet 66b1 may better withstand the various stresses and loads due to, for instance, the centrifugal forces due to the rotation of the shaft 30. In the embodiment shown in FIG. 6, the radially-outward protruding tabs 66 are each oriented in the same direction, illustratively with the second outer tab fillet 66b2 oriented in a clockwise direction. Other orientations may be contemplated as well. In the embodiment shown in FIG. 6, the side portion 66b3 and radial end portion 66b4 form a ninety degree angle. This corner of the radially-outward protruding tabs 66 may provide an anti-rotation feature for the nut 50 once the lock washer 60 is installed in the rotating assembly 20. Due to the asymmetric geometry of the radially-outward protruding tabs 66 in this embodiment, the depicted lock washer in FIG. 6 may thus be non-reversible.

In the embodiment shown in FIG. 6, the radially-outward protruding tab 66 that is positioned closest in an angular direction to an adjacent radially-inward protruding tab 65 (denoted by angle Θ_{C}) has its first outer tab fillet 66b1, i.e. with the larger fillet radius, oriented towards that adjacent radially-inward protruding tab 65. As the highest stresses may occur nearest the radially-inward protruding tabs 65, this orientation may allow the radially-outward protruding tabs 66 to best withstand such stresses. Other orientations and arrangements may be contemplated as well.

As the lock washer 60 depicted in FIG. 6 may not be reversible, other means for increasing its installation accuracy within the rotating assembly 20 may be contemplated. For instance, optimizing the number and positioning of shaft slots 35 and nut slots 57 may be contemplated, as discussed above. In addition, the angular positioning and offset angles Θ_{A} of the radially inward protruding tabs 65 and radially outward protruding tabs 66 may be optimized based on a specific shaft 30 and nut 50 combination. In various embodiments, multiple lock washers 60 may be manufactured having different radially inward protruding tab 65 and radially outward protruding tab 66 arrangements for different combinations of shafts 30 and nuts 50. Other accuracy optimization means may be contemplated as well.

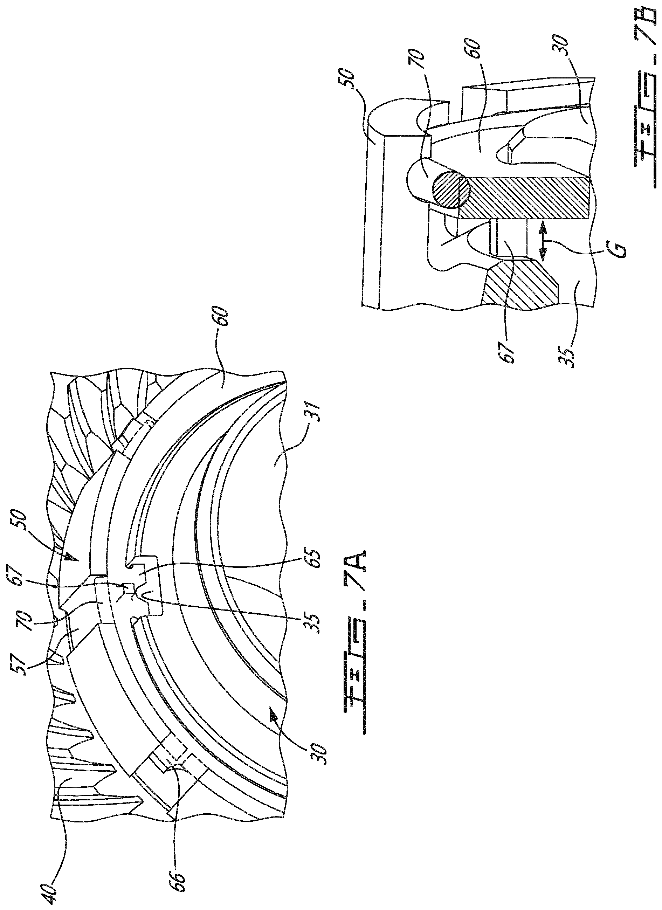

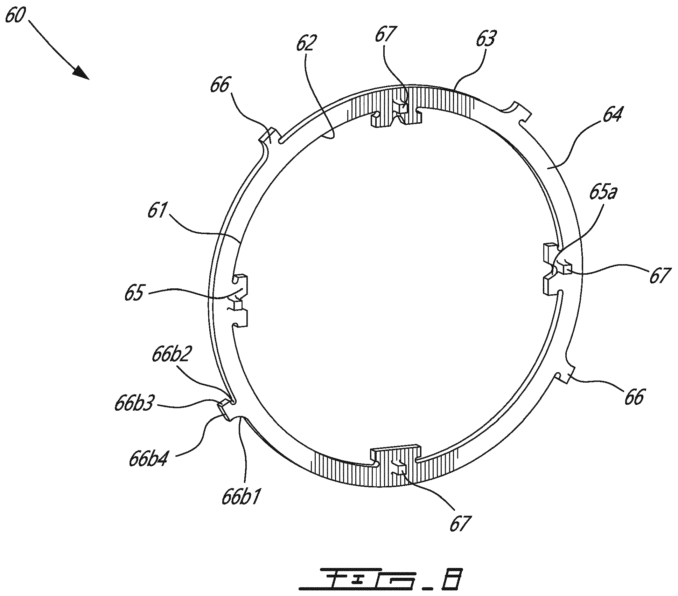

Referring to FIGS. 7A-7B and 8, another embodiment of a rotating assembly 20 is shown, with like reference numerals used to identify like components. Similar to the lock washer 60 shown in FIG. 6, the lock washer 60 of FIG. 8 includes asymmetric radially-outward protruding tabs 66 with first (i.e. larger) outer tab fillets 66b1 and second (i.e. smaller) outer tab fillets 66b2. As such, the lock washer 60 shown in FIG. 8 is non-reversibly insertable into the rotating assembly of FIG. 7A. In this embodiment, to avoid the lock washer 60 being inadvertently being installed incorrectly in the rotating assembly 20, the lock washer 60 includes axially-protruding tabs 67 protruding from one of the axial surfaces 64 the annular body 61. While the lock washer in FIG. 8 includes four axially-protruding tabs 67, each circumferentially positioned adjacent a radially-inward protruding tab 65, other numbers and positions of axially protruding tabs 67 may be contemplated as well. The illustrated axially-protruding tabs 67 have square-shaped cross-sections, although other cross-sectional shapes such as rectangular or circular may be contemplated as well.

Referring to FIG. 7A, the lock washer 60 of FIG. 8 is shown to be properly installed in the rotating assembly 20, with the axially-protruding tabs 67 oriented away from the nut 50 and the side portions 66b3 of the radially-outward protruding tabs 66 in contact with inner surfaces of the nut slots 57 to prevent rotation of the nut 50. In this embodiment, there is sufficient axial clearance between the lock washer 60 and retaining wire 70 for precise installation of all components without interference.

Referring to FIG. 7B, the lock washer 60 of FIG. 8 is shown to be incorrectly installed in the rotating assembly 20, with the axially-protruding tabs 67 oriented towards the nut 50. In this embodiment, the side portions 66b3 of the radially-outward protruding tabs 66 would not be in contact with inner surfaces of the nut slots 57 and would thus not prevent rotation of the nut 50. However, due to the axially-protruding tabs 67 creating an axial gap G between the nut 50 and the lock washer 60. Due to this axial gap G, there is no axial clearance between the lock washer 60 and retaining wire 70 and thus they would interfere with each other upon installation. As such, the axially-protruding tabs 67 may prevent the lock washer 60 from being installed in an incorrect orientation. Other mistake-proofing means may be contemplated as well.

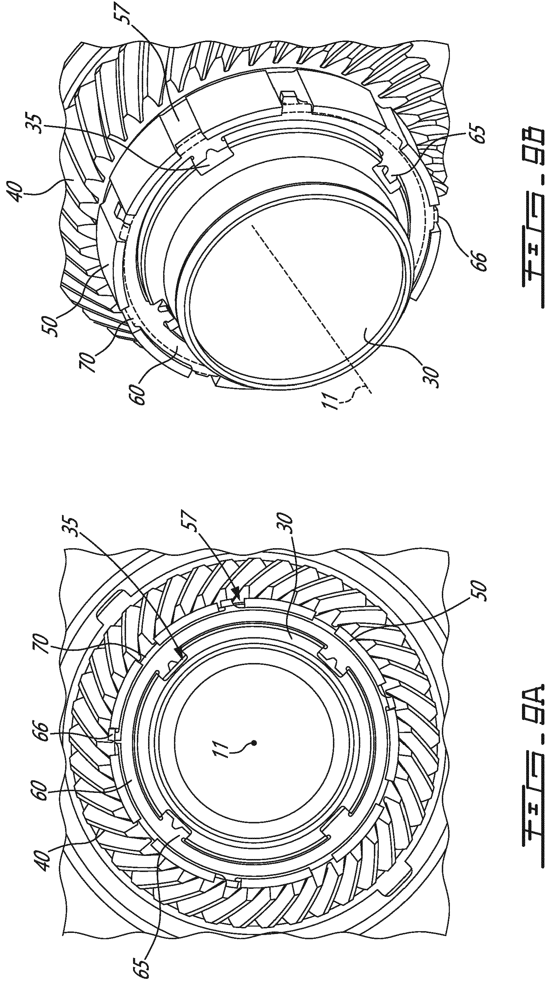

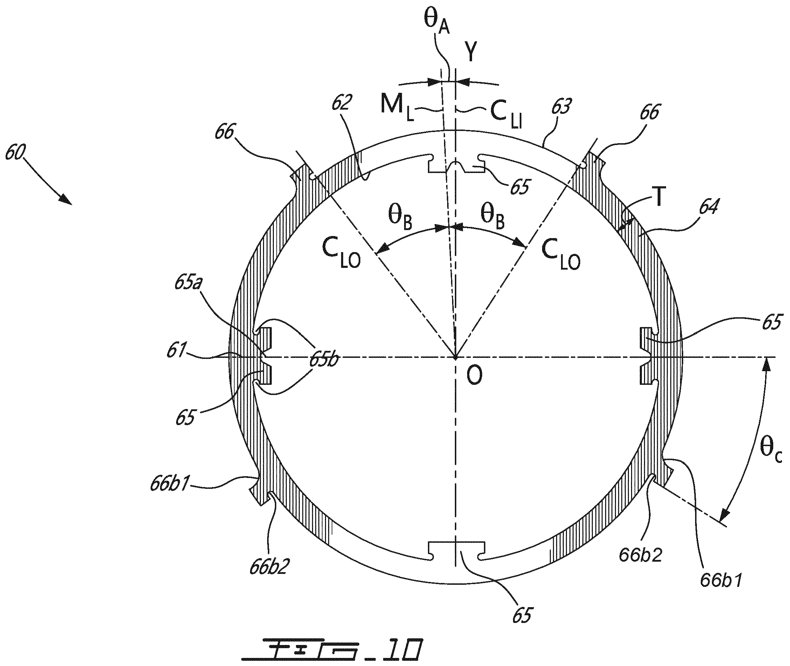

Referring to FIG. 9A-9B and 10, another embodiment of a rotating assembly 20 is shown, with like reference numerals used to identify like components. Similar to the lock washer 60 shown in FIG. 6, the lock washer 60 of FIG. 8 includes asymmetric radially-outward protruding tabs 66 with first (i.e. larger) outer tab fillets 66b1 and second (i.e. smaller) outer tab fillets 66b2. In this embodiment, a first set of radially-outward protruding tabs 66 are oriented in a first direction while a second set of radially-outward protruding tabs 66 are oriented in a second direction. As such, the lock washer 60 of FIG. 10 may be reversibly installed in the rotating assembly, as will be discussed in further detail below. Illustratively, of the four radially-outward protruding tabs 66 on the outer circumferential surface 63, two radially-outward protruding tabs 66 have their second (i.e. smaller) outer tab fillets 66b2 oriented in a clockwise direction while the two other radially outward protruding tabs 66 have their second (i.e. smaller) outer tab fillets 66b2 oriented in a counter-clockwise direction. Other numbers and directions may be contemplated as well. As shown in FIG. 10, the orientations of the outer tab fillets 66b alternate between each adjacent radially-outward protruding tab 66. In other cases, the adjacent radially-outward protruding tabs 66 may share a common orientation for their outer tab fillets 66b before shifting to a different orientation at a certain point along the circumference of the outer circumferential surface 63.

Referring to FIGS. 9A and 9B, once the lock washer 60 of FIG. 10 is installed in the rotating assembly, two of the four side portions 66b3 are in contact with inner surfaces of the nut slots 57 for preventing rotation of the nut 50. If the lock washer 60 were installed in a reversed orientation, the two side portions 66b3 that were not making contact with inner surfaces of the nut slots 57 in the original orientation would now make such contact, once again preventing rotation of the nut 50. As such, the lock washer 60 of FIG. 10 may be reversibly installed in the rotating assembly 20 despite its asymmetrically-shaped radially-outward protruding tabs 66, which may improve installation accuracy. As in previous embodiments, the offset angle Θ_{A} may be adjusted as well for improved alignment accuracy of installation. For instance, as discussed above, the offset angle Θ_{A} may be defined between the mean line M_{L} of two radially-outward protruding tabs 66 and the center line C_{LI} of the radially-inward protruding tab 65 positioned between the two radially-outward protruding tabs 66.

The embodiments described in this document provide non-limiting examples of possible implementations of the present technology. Upon review of the present disclosure, a person of ordinary skill in the art will recognize that changes may be made to the embodiments described herein without departing from the scope of the claims. Yet further modifications could be implemented by a person of ordinary skill in the art in view of the present disclosure, which modifications would be within the scope of the claims.

## Claims

1. A lock washer (60) for preventing relative rotation between an inner component (30) and an outer component (50) in an aircraft engine (10), comprising:
an annular body (61) having an inner circumferential surface (62) and an outer circumferential surface (63) radially spaced apart to define a radial thickness (T) of the annular body (61);
radially-inward protruding tabs (65) extending radially inwardly from the inner circumferential surface (62) of the annular body (61) and operable for engagement with slots (35) in the inner component (30); and
radially-outward protruding tabs (66) extending radially outwardly from the outer circumferential surface (63) of the annular body (61) and operable for engagement with slots (57) in the outer component (50),
wherein
the radially-outward protruding tabs (66) are circumferentially offset from the radially-inward protruding tabs (65) such that there is no circumferential overlap between any radially-inward protruding tabs (65) and any radially-outward protruding tabs (66); **characterized in that**
one or more of the radially-inward protruding tabs (65) have a cutout portion (65a) defined in a radially inner surface therein.

2. The lock washer (60) as defined in claim 1, wherein, for two of the radially-outward protruding tabs (66) and one of the radially-inward protruding tabs (65) circumferentially positioned between the two radially-outward protruding tabs (66), an offset angle (θ_{A}) is defined between a mean line (M_{L}) of the two radially-outward protruding tabs (66) and a center line (C_{LI}) of the radially-inward protruding tab (65) extending between a radial center (O) of the lock washer (60) and the radially-inward protruding tab (65), the mean line (M_{L}) extending from the radial center (O) of the lock washer (60) and defined at an angular midpoint between two respective center lines (C_{LO}) of the radially-outward protruding tabs (66), each respective center line (C_{LI}, C_{LO}) extending between the radial center (O) of the lock washer (60) and a respective radially-outward protruding tab (66), wherein the mean line (M_{L}) is circumferentially offset from the center line (C_{LI}) of the radially-inward protruding tab (65).

3. The lock washer (60) as defined in any one of the preceding claims, wherein the radially-outward protruding tabs (66) each include a pair of like fillets (66b) joining each radially-outward protruding tab (66) to the outer circumferential surface (63).

4. The lock washer (60) as defined in any one of the preceding claims, wherein each of the radially-outward protruding tabs (66) includes a first fillet (66b1) joining each of the radially-outward protruding tabs (66) to the outer circumferential surface (62) and a second fillet (66b2) joining each of the radially-outward protruding tabs (66) to the outer circumferential surface (62), the first fillet (66b1) having a greater radius than the second fillet (66b2).

5. The lock washer (60) as defined in claim 4, wherein one of the radially-outward protruding tabs (66) is positioned nearest to an adjacent radially-inward protruding tab (65) in a circumferential direction, said one of the radially-outward protruding tabs (66) having its first fillet (66b1) oriented towards said adjacent radially-inward protruding tab (65).

6. The lock washer (60) as defined in claim 4 or 5, wherein the first fillets (66b1) of the radially-outward protruding tabs (66) are oriented in a same circumferential direction.

7. The lock washer (60) as defined in claim 6, further comprising axially-protruding tabs (67) protruding from the annular body (61) of the lock washer (60).

8. The lock washer (60) as defined in claim 4, wherein a first group of the radially-outward protruding tabs (66) include first fillets (66b1) oriented in a first circumferential direction and a second group of the radially-outward protruding tabs (66) include first fillets (66b1) oriented in a second circumferential direction opposite the first circumferential direction.

9. The lock washer (60) as defined in any one of the preceding claims, wherein one or more of the radially-outward protruding tabs (66) has a cutout portion (66a) defined in a radially outer surface therein.

10. A rotating shaft assembly (20) for an aircraft engine (10), comprising:
a shaft (30) rotatable about a rotation axis (11), the shaft (30) having a shaft outer circumferential surface (33) with shaft slots (35) circumferentially spaced apart around the shaft outer circumferential surface (33);
one or more components (40) mounted to the rotating shaft (30) for rotation therewith;
a nut (50) rotatably mountable to the shaft outer circumferential surface (33) to axially retain the one or more components (40), the nut (50) having nut slots (57) circumferentially spaced apart around a circumference of the nut and a groove (58) disposed in a radially inward facing surface (54) of the nut (50);
the lock washer (60) as defined in any one of the preceding claims, wherein the radially-inward protruding tabs (65) of the lock washer (60) are received within the shaft slots (35), the radially-outward protruding tabs (66) of the annular body (61) of the lock washer (60) being received within the nut slots (57) to lock the nut (50) to the shaft (30) and prevent relative rotation therebetween; and
a retaining feature (70) insertable into the groove (58) in the nut (50), the retaining feature (70) axially retaining the lock washer (60).

11. The rotating shaft assembly (20) as defined in claim 10, wherein the retaining feature (70) is a retaining wire (70).

12. A method for assembling a retention assembly for an aircraft engine (10), comprising:
rotatably mounting a nut (50) to a shaft (30);
inserting a lock washer (60) between the shaft (50) and the nut (50), the lock washer (60) having an annular body (61) with radially-inward protruding tabs (65) protruding from an inner circumferential surface (62) of the lock washer (60) and radially-outward protruding tabs (66) protruding from an outer circumferential surface (63) of the lock washer (60), wherein one or more of the radially-inward protruding tabs (65) have a cutout portion (65a) defined in a radially inner surface therein;
aligning and inserting the radially-inward protruding tabs (65) of the lock washer (60) in slots (35) disposed about an outer circumferential surface (33) of the shaft (30);
aligning and inserting the radially-outward protruding tabs (66) of the lock washer (60) in slots (57) disposed about a circumference of the nut (50), wherein the radially-outward protruding tabs (66) are circumferentially offset from the radially-inward protruding tabs (65) such that there is no circumferential overlap between any radially-inward protruding tabs (65) and any radially-outward protruding tabs (66); and
inserting a retaining wire (70) into a circumferential groove (58) in the nut (50) to axially retain the lock washer (60).

## Patentansprüche

1. Sicherungsscheibe (60) zum Verhindern relativer Rotation zwischen einem inneren Bauteil (30) und einem äußeren Bauteil (50) in einem Luftfahrzeugtriebwerk (10), umfassend:
einen ringförmigen Körper (61), der eine innere Umfangsoberfläche (62) und eine äußere Umfangsoberfläche (63) aufweist, die radial beabstandet sind, um eine radiale Dicke (T) des ringförmigen Körpers (61) zu definieren;
radial nach innen vorstehende Laschen (65), die sich radial nach innen von der inneren Umfangsoberfläche (62) des ringförmigen Körpers (61) erstrecken und zum Eingriff in Schlitze (35) in dem inneren Bauteil (30) betreibbar sind; und
radial nach außen vorstehende Laschen (66), die sich radial nach außen von der äußeren Umfangsoberfläche (63) des ringförmigen Körpers (61) erstrecken und zum Eingriff in Schlitze (57) in dem äußeren Bauteil (50) betreibbar sind,
wobei
die radial nach außen vorstehenden Laschen (66) derart in Umfangsrichtung von den radial nach innen vorstehenden Laschen (65) versetzt sind, dass keine Überlappung in Umfangsrichtung zwischen jeglichen radial nach innen vorstehenden Laschen (65) und jeglichen radial nach außen vorstehenden Laschen (66) besteht; **dadurch gekennzeichnet, dass**
eine oder mehrere der radial nach innen vorstehenden Laschen (65), einen Ausschnittsabschnitt (65a), der in einer radial inneren Oberfläche darin definiert ist, aufweisen.

2. Sicherungsscheibe (60) nach Anspruch 1, wobei für zwei der radial nach außen vorstehenden Laschen (66) und eine der radial nach innen vorstehenden Laschen (65), die in Umfangsrichtung zwischen den zwei radial nach außen vorstehenden Laschen (66) positioniert ist, ein Versatzwinkel (θ_{A}) zwischen einer mittleren Linie (M_{L}) der zwei radial nach außen vorstehenden Laschen (66) und einer Mittellinie (C_{LI}) der radial nach innen vorstehenden Lasche (65), die sich zwischen einem radialen Mittelpunkt (O) der Sicherungsscheibe (60) und der radial nach innen vorstehenden Lasche (65) erstreckt, definiert ist, wobei sich die mittlere Linie (M_{L}) von dem radialen Mittelpunkt (O) der Sicherungsscheibe (60) erstreckt und an einem Winkelmittelpunkt zwischen zwei jeweiligen Mittellinien (C_{LO}) der radial nach außen vorstehenden Laschen (66) definiert ist, wobei sich jede jeweilige Mittellinie (C_{LI}, C_{LO}) zwischen dem radialen Mittelpunkt (O) der Sicherungsscheibe (60) und einer jeweiligen radial nach außen vorstehenden Lasche (66) erstreckt, wobei die mittlere Linie (M_{L}) in Umfangsrichtung von der Mittellinie (C_{LI}) der radial nach innen vorstehenden Lasche (65) versetzt ist.

3. Sicherungsscheibe (60) nach einem der vorhergehenden Ansprüche, wobei die radial nach außen vorstehenden Laschen (66) jeweils ein Paar gleicher Verrundungen (66b), die jede radial nach außen vorstehende Lasche (66) mit der äußeren Umfangsoberfläche (63) verbinden, beinhalten.

4. Sicherungsscheibe (60) nach einem der vorhergehenden Ansprüche, wobei jede der radial nach außen vorstehenden Laschen (66) eine erste Verrundung (66b1), die jede der radial nach außen vorstehenden Laschen (66) mit der äußeren Umfangsoberfläche (62) verbindet, und eine zweite Verrundung (66b2), die jede der radial nach außen vorstehenden Laschen (66) mit der äußeren Umfangsoberfläche (62) verbindet, beinhaltet, wobei die erste Verrundung (66b1) einen größeren Radius als die zweite Verrundung (66b2) aufweist.

5. Sicherungsscheibe (60) nach Anspruch 4, wobei eine der radial nach außen vorstehenden Laschen (66) am nächsten zu einer benachbarten, radial nach innen vorstehenden Lasche (65) in einer Umfangsrichtung positioniert ist, wobei die erste Verrundung (66b1) der einen der radial nach außen vorstehenden Laschen (66) auf die benachbarte, radial nach innen vorstehende Lasche (65) ausgerichtet ist.

6. Sicherungsscheibe (60) nach Anspruch 4 oder 5, wobei die ersten Verrundungen (66b1) der radial nach außen vorstehenden Laschen (66) in einer gleichen Umfangsrichtung ausgerichtet sind.

7. Sicherungsscheibe (60) nach Anspruch 6, die ferner axial vorstehende Laschen (67) umfasst, die von dem ringförmigen Körper (61) der Sicherungsscheibe (60) vorstehen.

8. Sicherungsscheibe (60) nach Anspruch 4, wobei eine erste Gruppe der radial nach außen vorstehenden Laschen (66) erste Verrundungen (66b1) beinhaltet, die in einer ersten Umfangsrichtung ausgerichtet sind, und eine zweite Gruppe der radial nach außen vorstehenden Laschen (66) erste Verrundungen (66b1) beinhaltet, die in einer zweiten, der ersten Umfangsrichtung entgegengesetzten Umfangsrichtung ausgerichtet sind.

9. Sicherungsscheibe (60) nach einem der vorhergehenden Ansprüche, wobei eine oder mehrere der radial nach außen vorstehenden Laschen (66) einen Ausschnittsabschnitt (66a), der in einer radial äußeren Oberfläche darin definiert ist, aufweisen.

10. Rotationswellenbaugruppe (20) für ein Luftfahrzeugtriebwerk (10), umfassend:
eine um eine Rotationsachse (11) rotierbare Welle (30), wobei die Welle (30) eine äußere Wellenumfangsoberfläche (33) mit Wellenschlitzen (35) aufweist, die in Umfangsrichtung um die äußere Wellenumfangsoberfläche (33) herum beabstandet sind;
ein oder mehrere Bauteile (40), die an der Rotationswelle (30) zur Rotation mit dieser angebracht sind;
eine Mutter (50), die rotierbar auf der äußeren Wellenumfangsoberfläche (33) angebracht werden kann, um das eine oder die mehreren Bauteile (40) axial zu halten, wobei die Mutter (50) Mutterschlitze (57), die um einen Umfang der Mutter herum in Umfangsrichtung beabstandet sind, und eine Nut (58), die in einer radial nach innen gerichteten Oberfläche (54) der Mutter (50) angeordnet ist, aufweist;
die Sicherungsscheibe (60) nach einem der vorhergehenden Ansprüche, wobei die radial nach innen vorstehenden Laschen (65) der Sicherungsscheibe (60) innerhalb der Wellenschlitze (35) aufgenommen sind, die radial nach außen vorstehenden Laschen (66) des ringförmigen Körpers (61) der Sicherungsscheibe (60) innerhalb der Mutterschlitze (57) aufgenommen sind, um die Mutter (50) auf der Welle (30) zu sichern und relative Rotation zwischen ihnen zu verhindern; und
ein in die Nut (58) der Mutter (50) einsetzbares Halteelement (70), wobei das Halteelement (70) die Sicherungsscheibe (60) axial hält.

11. Rotationswellenbaugruppe (20) nach Anspruch 10, wobei das Halteelement (70) ein Haltedraht (70) ist.

12. Verfahren zum Zusammenbauen einer Haltebaugruppe für ein Luftfahrzeugtriebwerk (10), umfassend:
rotierbares Anbringen einer Mutter (50) an einer Welle (30);
Einsetzen einer Sicherungsscheibe (60) zwischen die Welle (50) und die Mutter (50), wobei die Sicherungsscheibe (60) einen ringförmigen Körper (61) mit radial nach innen vorstehenden Laschen (65), die von einer inneren Umfangsoberfläche (62) der Sicherungsscheibe (60) vorstehen, und radial nach außen vorstehenden Laschen (66), die von einer äußeren Umfangsoberfläche (63) der Sicherungsscheibe (60) vorstehen, aufweist, wobei eine oder mehrere der radial nach innen vorstehenden Laschen (65) einen Ausschnittsabschnitt (65a), der in einer radial inneren Oberfläche darin definiert ist, aufweisen;
Ausrichten und Einsetzen der radial nach innen vorstehenden Laschen (65) der Sicherungsscheibe (60) in Schlitze (35), die um eine äußere Umfangsoberfläche (33) der Welle (30) angeordnet sind;
Ausrichten und Einsetzen der radial nach außen vorstehenden Laschen (66) der Sicherungsscheibe (60) in Schlitze (57), die um einen Umfang der Mutter (50) angeordnet sind, wobei die radial nach außen vorstehenden Laschen (66) derart von den radial nach innen vorstehenden Laschen (65) in Umfangsrichtung versetzt sind, dass keine Überlappung in Umfangsrichtung zwischen jeglichen radial nach innen vorstehenden Laschen (65) und jeglichen radial nach außen vorstehenden Laschen (66) besteht; und
Einsetzen eines Haltedrahts (70) in eine umlaufende Nut (58) in der Mutter (50), um die Sicherungsscheibe (60) axial zu halten.

## Revendications

1. Rondelle de blocage (60) destinée à empêcher une rotation relative entre un composant interne (30) et un composant externe (50) dans un moteur d'aéronef (10), comprenant :
un corps annulaire (61) ayant une surface circonférentielle interne (62) et une surface circonférentielle externe (63) radialement espacées pour définir une épaisseur radiale (T) du corps annulaire (61) ;
des languettes saillantes radialement vers l'intérieur (65) s'étendant radialement vers l'intérieur à partir de la surface circonférentielle interne (62) du corps annulaire (61) et pouvant fonctionner pour venir en prise avec des fentes (35) dans le composant interne (30) ; et
des languettes saillantes radialement vers l'extérieur (66) s'étendant radialement vers l'extérieur à partir de la surface circonférentielle externe (63) du corps annulaire (61) et pouvant fonctionner pour venir en prise avec des fentes (57) dans le composant externe (50),
dans laquelle
les languettes saillantes radialement vers l'extérieur (66) sont décalées circonférentiellement par rapport aux languettes saillantes radialement vers l'intérieur (65) de telle sorte qu'il n'y a aucun chevauchement circonférentiel entre de quelconques languettes saillantes radialement vers l'intérieur (65) et de quelconques languettes saillantes radialement vers l'extérieur (66) ; **caractérisée en ce que**
une ou plusieurs des languettes saillantes radialement vers l'intérieur (65) ont une partie découpée (65a) définie dans une surface radialement interne à l'intérieur.

2. Rondelle de blocage (60) selon la revendication 1, dans laquelle, pour deux des languettes saillantes radialement vers l'extérieur (66) et une des languettes saillantes radialement vers l'intérieur (65) positionnées circonférentiellement entre les deux languettes saillantes radialement vers l'extérieur (66), un angle de décalage (θ_{A}) est défini entre une ligne moyenne (M_{L}) des deux languettes saillantes radialement vers l'extérieur (66) et une ligne centrale (C_{LI}) de la languette saillante radialement vers l'intérieur (65), s'étendant entre un centre radial (O) de la rondelle de blocage (60) et la languette saillante radialement vers l'intérieur (65), la ligne moyenne (M_{L}) s'étendant depuis le centre radial (O) de la rondelle de blocage (60) et étant définie au niveau d'un point médian angulaire entre deux lignes centrales (C_{LO}) respectives des languettes saillantes radialement vers l'extérieur (66), chaque ligne centrale (C_{LI}, C_{LO}) respective s'étendant entre le centre radial (O) de la rondelle de blocage (60) et une languette saillante radialement vers l'extérieur (66) respective, dans laquelle la ligne moyenne (M_{L}) est décalée circonférentiellement par rapport à la ligne centrale (C_{LI}) de la languette saillante radialement vers l'intérieur (65).

3. Rondelle de blocage (60) selon l'une des revendications précédentes, dans laquelle les languettes saillantes radialement vers l'extérieur (66) comportent chacune une paire de congés (66b) semblables joignant chaque languette saillante radialement vers l'extérieur (66) à la surface circonférentielle externe (63).

4. Rondelle de blocage (60) selon l'une quelconque des revendications précédentes, dans laquelle chacune des languettes saillantes radialement vers l'extérieur (66) comporte un premier congé (66b1) joignant chacune des languettes saillantes radialement vers l'extérieur (66) à la surface circonférentielle externe (62) et un second congé (66b2) joignant chacune des languettes saillantes radialement vers l'extérieur (66) à la surface circonférentielle externe (62), le premier congé (66b1) ayant un rayon plus grand que le second congé (66b2).

5. Rondelle de blocage (60) selon la revendication 4, dans laquelle l'une des languettes saillantes radialement vers l'extérieur (66) est positionnée au plus près d'une languette saillante radialement vers l'intérieur (65) adjacente dans une direction circonférentielle, ladite languette des languettes saillantes radialement vers l'extérieur (66) ayant son premier congé (66b1) orienté vers ladite languette saillante radialement vers l'intérieur (65) adjacente.

6. Rondelle de blocage (60) selon la revendication 4 ou 5, dans laquelle les premiers congés (66b1) des languettes saillantes radialement vers l'extérieur (66) sont orientés dans une même direction circonférentielle.

7. Rondelle de blocage (60) selon la revendication 6, comprenant en outre des languettes saillantes axialement (67) faisant saillie du corps annulaire (61) de la rondelle de blocage (60).

8. Rondelle de blocage (60) selon la revendication 4, dans laquelle un premier groupe des languettes saillantes radialement vers l'extérieur (66) comporte des premiers congés (66b1) orientés dans une première direction circonférentielle et un second groupe des languettes saillantes radialement vers l'extérieur (66) comporte des premiers congés (66b1) orientés dans une seconde direction circonférentielle opposée à la première direction circonférentielle.

9. Rondelle de blocage (60) selon l'une des revendications précédentes, dans laquelle une ou plusieurs des languettes saillantes radialement vers l'extérieur (66) ont une partie découpée (66a) définie dans une surface radialement externe à l'intérieur.

10. Ensemble arbre rotatif (20) pour un moteur d'aéronef (10), comprenant :
un arbre (30) rotatif autour d'un axe de rotation (11), l'arbre (30) ayant une surface circonférentielle externe d'arbre (33) avec des fentes d'arbre (35) espacées circonférentiellement autour de la surface circonférentielle externe d'arbre (33) ;
un ou plusieurs composants (40) montés sur l'arbre rotatif (30) pour rotation avec celui-ci ;
un écrou (50) pouvant être monté de manière rotative sur la surface circonférentielle externe d'arbre (33) pour retenir axialement les un ou plusieurs composants (40), l'écrou (50) ayant des fentes d'écrou (57) espacées circonférentiellement autour d'une circonférence de l'écrou et une rainure (58) disposée dans une surface faisant face radialement vers l'intérieur (54) de l'écrou (50) ;
la rondelle de blocage (60) selon l'une quelconque des revendications précédentes, dans lequel les languettes saillantes radialement vers l'intérieur (65) de la rondelle de blocage (60) sont reçues au sein des fentes d'arbre (35), les languettes saillantes radialement vers l'extérieur (66) du corps annulaire (61) de la rondelle de blocage (60) étant reçues dans les fentes d'écrou (57) pour bloquer l'écrou (50) sur l'arbre (30) et empêcher une rotation relative entre eux ; et
un élément de retenue (70) insérable dans la rainure (58) dans l'écrou (50), l'élément de retenue (70) retenant axialement la rondelle de blocage (60).

11. Ensemble arbre rotatif (20) selon la revendication 10, dans lequel l'élément de retenue (70) est un fil de retenue (70).

12. Procédé d'assemblage d'un ensemble de retenue pour un moteur d'aéronef (10), comprenant :
le montage rotatif d'un écrou (50) sur un arbre (30) ;
l'insertion d'une rondelle de blocage (60) entre l'arbre (50) et l'écrou (50), la rondelle de blocage (60) ayant un corps annulaire (61) avec des languettes saillantes radialement vers l'intérieur (65) faisant saillie d'une surface circonférentielle interne (62) de la rondelle de blocage (60) et des languettes saillantes radialement vers l'extérieur (66) faisant saillie d'une surface circonférentielle externe (63) de la rondelle de blocage (60), dans lequel une ou plusieurs des languettes saillantes radialement vers l'intérieur (65) ont une partie découpée (65a) définie dans une surface radialement interne à l'intérieur ;
l'alignement et l'insertion des languettes saillantes radialement vers l'intérieur (65) de la rondelle de blocage (60) dans des fentes (35) disposées autour d'une surface circonférentielle externe (33) de l'arbre (30) ;
l'alignement et l'insertion des languettes saillantes radialement vers l'extérieur (66) de la rondelle de blocage (60) dans des fentes (57) disposées autour d'une circonférence de l'écrou (50), dans lequel les languettes saillantes radialement vers l'extérieur (66) sont décalées circonférentiellement par rapport aux languettes saillantes radialement vers l'intérieur (65) de telle sorte qu'il n'y a aucun chevauchement circonférentiel entre de quelconques languettes saillantes radialement vers l'intérieur (65) et de quelconques languettes saillantes radialement vers l'extérieur (66) ; et
l'insertion d'un fil de retenue (70) dans une rainure circonférentielle (58) de l'écrou (50) pour retenir axialement la rondelle de blocage (60).
